# EUROPÄISCHE PATENTANMELDUNG

(11) **EP 2 416 586 A2**
(43) Veröffentlichungstag der Anmeldung: **08.02.2012**
(21) Anmeldenummer: 11005085.3
(22) Anmeldetag: 22.06.2011
(51) Int. Cl.: H04N 21/4402

(54) **Zuspielung von Audio- und/oder Videosignalen an wenigstens eine externe Einrichtung zur Wiedergabe von Audio- und/oder Videosignalen**

(30) Priorität: 02.08.2010 DE 102010033034
(71) Anmelder: Vodafone Holding GmbH, 40213 Düsseldorf (DE)
(72) Erfinder: Nittenwilm, Markus, 56645 Kruft (DE)
(74) Vertreter: Ring & Weisbrodt

(57) **Zusammenfassung**

Die vorliegende Erfindung betrifft eine Vorrichtung (STB) zur Zuspielung von Audio- und/oder Videosignalen an wenigstens eine externe Einrichtung (TV) zur Wiedergabe von Audio- und/oder Videosignalen, aufweisend
- wenigstens eine Einrichtung (5) zum Empfang analoger Rundfunksignale,
- wenigstens eine Einrichtung (6) zum Empfang digitaler Rundfunksignale,
- wenigstens eine Einrichtung (7) zum Empfang und optional zum Senden digitaler Daten über einen Breitband-Internetzugang (11),
- wenigstens eine Einrichtung (Transcoder, 8) zur Transkodierung von Audiound/oder Videoinformationen aufweisenden Medienobjekten von einem Quellformat in wenigstens ein Zielformat,
- wenigstens eine Einrichtung (Decoder, 9) zur Dekodierung von Audio- und/oder Videoinformationen aufweisenden Medienobjekten, und
- wenigstens eine Schnittstelle (10) zur Bereitstellung von Audio- und/oder Videosignalen an eine externe Einrichtung (TV) zur Wiedergabe von Audiound/oder Videosignalen.

## Beschreibung

Die vorliegende Erfindung betrifft eine Vorrichtung zur Zuspielung von Audiound/oder Videosignalen an wenigstens eine externe Einrichtung zur Wiedergabe von Audio- und/oder Videosignalen.

Derartige Vorrichtungen sind im Stand der Technik insbesondere als sogenannte Set-Top-Boxen (STBs) in zahlreichen Ausführungsformen und Ausgestaltungen für unterschiedlichste Anwendungen bekannt. Dabei wird in der Regel unterschieden zwischen aktiven, passiven und bidirektionalen Set-Top-Boxen (nachfolgend auch STB genannt). Aktive STBs liefern einer externen Einrichtung Daten und/oder ermöglichen Funktionalitäten bzw. Funktionen, ohne das die aktiven STBs von der externen Einrichtung eine Rückmeldung benötigen. Aktive STBs sind beispielsweise DVD-Player oder klassische Spielekonsolen. Passive STBs sind auf Daten und/oder Funktionalitäten bzw. Funktionen der externen Einrichtung angewiesen, liefern der externen Einrichtung aber keine Daten und ermöglichen der externen Einrichtung auch keine Funktionalitäten bzw. Funktionen. Bidirektionale STBs haben sowohl aktive als auch passive Fähigkeiten. Bidirektionale STBs sind beispielsweise sogenannte DVD-Recorder, da diese in der Regel auch als DVD-Player einsetzbar sind, sowie sogenannte Satelliten- bzw. Kabelreceiver zum Empfang von analogen oder digitalen Rundfunkprogrammen bzw. -signalen, insbesondere wenn diese auch zur Entschlüsselung von verschlüsselten Rundfunkprogrammen bzw. -signalen eingesetzt werden.

Die Vorrichtung (STB) gemäß der vorliegenden Erfindung betrifft insbesondere STBs, die zum Empfang von Rundfunksignalen ausgebildet und/oder eingerichtet sind.

Der vorrangige Zweck einer Übertragung von Rundfunksignalen wie Fernsehprogrammen und/oder dergleichen, besteht darin, visuelle Programme an Empfänger zu übertragen. In Verbindung mit dem Rundfunksignale werden dabei oftmals zusätzlich zu dem eigentlichen Fernsehprogramm ergänzende Informationen übertragen, wie beispielsweise Steuerdaten von Videogeräten oder dergleichen. Durch Verschlüsselung des Übertragungssignals ist es möglich, das Programm so zu verteilen, dass es nur von bestimmten Nutzern entschlüsselt visualisierbar ist. Dazu werden den Nutzern in der Regel Mittel zum Entschlüsseln der verschlüsselten Signale zur Verfügung gestellt. Mittels der beispielsweise in einer Fernsehübertragung enthaltenen zusätzlichen Informationen ist es möglich, ausschließlich einer bestimmten Gruppe von Nutzern durch Entschlüsseln dieser Informationen Zusatzdienste bereitzustellen. Ein Beispiel hierfür ist insbesondere das sogenannte Pay-TV.

Im Stand der Technik sind eine Vielzahl von Set-Top-Box-Lösungen zum Entschlüsseln eines verschlüsselten Rundfunksignals bekannt, beispielsweise aus der EP 0 986 911 B1 oder der EP 1 377 055 B1. Üblicherweise werden bei derartigen STBs die zum Entschlüsseln des Rundfunksignals benötigten Entschlüsselungsschlüssel mittels Datenspeichermedien, wie beispielsweise eine Speicherkarte (Smart Card), an die Vorrichtung (STB) übertragen.

Neben der Übertragung von Rundfunkprogrammen, insbesondere Fernsehsendungen und/oder Filme, mittels analoger und/oder digitaler Rundfunksignale ist es im Stand der Technik bekannt, Rundfunkprogramme mittels sogenanntem IPTV (IPTV: Internet Protocol Television) an Nutzer zu übertragen, beispielsweise aus der US 2008/0120668 A1. Mit IPTV wird dabei ganz allgemein der Übertragungsweg Internet für Fernsehprogramme und Filme bezeichnet. Entsprechend für IPTV ausgebildete Vorrichtungen STBs weisen dazu anstelle eines Empfängers für analoge und/oder digitale Rundfunksignale einen Internetzugang auf. Programme werden dabei in der Regel mittels sogenannten Medienobjekten übertragen. Medienobjekte weisen dabei neben Audio- und/oder Videoinformationen in der Regel ferner insbesondere Daten auf, die eine Steuerung der Audio- und/oder Videoinformationen als auch der entsprechenden, die Medienobjekte nutzenden Einrichtungen ermöglichen.

Es ist davon auszugehen, dass sich die klassische Übertragung von Rundfunkprogrammen mittels analoger und/oder digitaler Rundfunksignale über Antenne, Satellit und/oder Kabel nach und nach auf eine Übertragung über das Internet verlagern wird, insbesondere da durch und/oder in Kombination mit den Möglichkeiten des Internets zahlreiche weitere Funktionen bzw. Funktionalitäten im Zusammenhang mit entsprechenden Fernsehsendungen bzw. Filmen realisieren lassen, beispielsweise Interaktionen, Einkäufe und/oder dergleichen.

In der Übergangszeit ist ein Bedarf an Lösungen gegeben, die die Möglichkeiten der Übertragung von Fernsehprogrammen und/oder Filmen umfangreich abdecken, insbesondere ohne das sich die Nutzer separate STBs für die einzelnen Übertragungs- bzw. Empfangsmöglichkeiten anschaffen müssen und um sicherzustellen, dass die Anwendung und Nutzung für Endverbraucher als Nutzer so unaufwändig und einfach wie möglich ist.

Der vorliegenden Erfindung liegt daher die Aufgabe zugrunde, eine verbesserte Vorrichtung zur Zuspielung von Audio- und/oder Videosignalen an wenigstens eine externe Einrichtung zur Wiedergabe von Audio- und/oder Videosignalen bereitzustellen.

Zur technischen Lösung wir mit der vorliegenden Erfindung eine Vorrichtung zur Zuspielung von Audio- und/oder Videosignalen an wenigstens eine externe Einrichtung zur Wiedergabe von Audio- und/oder Videosignalen, aufweisend
- wenigstens eine Einrichtung zum Empfang analoger Rundfunksignale,
- wenigstens eine Einrichtung zum Empfang digitaler Rundfunksignale,
- wenigstens eine Einrichtung zum Empfang und optional zum Senden digitaler Daten über einen Breitband-Internetzugang,
- wenigstens eine Einrichtung (Transcoder) zur Transkodierung von Audiound/oder Videoinformationen aufweisenden Medienobjekten von einem Quellformat in wenigstens ein Zielformat,
- wenigstens eine Einrichtung (Decoder) zur Dekodierung von Audio- und/oder Videoinformationen aufweisenden Medienobjekten, und
- wenigstens eine Schnittstelle zur Bereitstellung von Audio- und/oder Videosignalen an eine externe Einrichtung zur Wiedergabe von Audiound/oder Videosignalen.
vorgeschlagen.

Der Erfindung liegt die Erkenntnis zu Grunde, das eine verbesserte Zuspielung von Audio- und/oder Videosignalen an wenigstens eine externe Einrichtung zur Wiedergabe von Audio- und/oder Videosignalen realisierbar ist, wenn die Vorrichtung neben analogen und/oder digitalen Rundfunksignalen Programme auch über einen Internetzugang empfangen und/oder verarbeiten kann. Mit der erfindungsgemäßen Lösung benötigen Nutzer vorteilhafterweise nur eine einzige Vorrichtung zur Abdeckung von Übertragungen mittels Satellit, Kabel oder Internet.

Eine vorteilhafte Ausgestaltung der Erfindung sieht vor, dass die wenigstens eine Einrichtung zum Empfang und optional zum Senden digitaler Daten über einen Breitband-Internetzugang, zum Empfang von Audio- und/oder Videoinformationen aufweisenden Medienobjekten ausgebildet ist. Die Medienobjekte können dabei vorteilhafterweise sowohl als Dateien als auch als Datenströme zum Einsatz kommen. Für die Medienobjekte kommen dabei vorteilhafterweise die folgenden Container-Formate zur Anwendung: .avi, .divx, .qt, .mov, .mpa, .mpa2, .mp3, .wave, .mpeg, .wmv, .wma, .3gp und/oder dergleichen. Im Zusammenhang mit der Beschreibung bevorzugter Ausführungsbeispiele werden weitere vorteilhafter Container-Formate für vorteilhafterweise mit der erfindungsgemäßen Vorrichtung nutzbare bzw. verarbeitbare Medienobjekte näher erläutert.

In einer weiteren vorteilhaften Ausgestaltung der Erfindung ist die wenigstens eine Einrichtung zum Empfang und optional zum Senden digitaler Daten über einen Breitband-Internetzugang, zum Empfang und/oder zum Senden von Einstelldaten, Steuerdaten und/oder Zugangsberechtigungsdaten ausgebildet. Vorteilhafterweise ist die erfindungsgemäße Vorrichtung ausgebildet und/oder eingerichtet, folgende Verschlüsselungsalgorithmen und/oder -systeme zu unterstützen: AES, DES, Triple DES, DVB-CSA 1, NSA und/oder RSA.

Eine weitere vorteilhafte Ausgestaltung der Erfindung ist gekennzeichnet durch wenigstens einen an der wenigstens einen Einrichtung zum Empfang analoger Rundfunksignale anschließbaren Analog-Digital-Umsetzer zur Umsetzung eines analogen Eingangssignals in einen digitalen Datenstrom, vorzugsweise einen NXP7138 der NXP Semiconductors.

Vorteilhafterweise weist die wenigstens Einrichtung zum Empfang digitaler Rundfunksignale wenigstens einen Demodulator zur Demodulation digitaler Rundfunksignale auf, vorzugsweise gemäß einem DVB-C-Standard, gemäß einem DVB-C2-Standard, gemäß einem DVB-S-Standard und/oder gemäß einem DVB-S2-Standard.

Vorteilhafterweise weist die erfindungsgemäße Vorrichtung ferner wenigstens eine Schnittstelle zum Anschluss wenigstens einer Eingabeeinrichtung und Mittel zur Verarbeitung von über die Schnittstelle eingehenden Signalen zur Steuerung der Vorrichtung und/oder der wenigstens einen Einrichtung zur Wiedergabe von Audio- und/oder Videosignalen auf. Über kürzere Distanzen kann die Übertragung dabei vorteilhafterweise auch leitungslos, beispielsweise mittels WLAN (WLAN: Wireless LAN, LAN: Local Area Network), Bluetooth und/oder Infrarot (IR), erfolgen. Eine erfindungsgemäße Eingabeeinrichtung ist vorteilhafterweise nach Art einer vorzugsweise kabel- bzw. leitungsungebundenen Fernbedienung ausgebildet, insbesondere durch Verwendung von Infrarot-, Bluetooth- und/oder W-LAN-Schnittstellen seitens der erfindungsgemäßen Vorrichtung und der wenigstens einen Eingabeeinrichtung. Hierdurch lassen sich insgesamt die Bedienung und Handhabung der erfindungsgemäßen Vorrichtung und der wenigstens einen Einrichtung zur Wiedergabe von Audio- und/oder Videosignalen verbessern. Eine bevorzugte Ausführungsvariante sieht vor, dass die erfindungsgemäße Vorrichtung zur Aufnahme der als Fernbedienung ausgebildeten Eingabeeinrichtung nach Art einer Ladestation für die Fernbedienung ausgebildet und/oder eingerichtet ist.

In einer weiteren vorteilhaften Ausgestaltung der Erfindung weist die erfindungsgemäße Vorrichtung ferner wenigstens eine, vorzugsweise austauschbare Einrichtung zur Speicherung von digitalen Daten auf. Vorteilhafterweise ist die wenigstens eine, vorzugsweise austauschbare Einrichtung zur Speicherung von digitalen Daten zur Speicherung von Audiound/oder Videosignalen ausgebildet und/oder eingerichtet, wobei Audio- und/oder Videosignale vorzugsweise in Medienobjekten gemäß einem MPEG-1-Standard, gemäß einem MPEG-2-Standard und/oder gemäß einem MPEG-4-Standard speicherbar sind, Videosignale besonders vorzugsweise in einem High Definition-Format (HD) und/oder in einem Standard Definition-Format (SD), besonders vorzugsweise mit einer Bildauflösung von 1920 mal 1080 Bildpunkten (HD) oder 720 mal 576 Bildpunkten (SD). Die vorzugsweise austauschbare Einrichtung zur Speicherung von digitalen Daten ist vorteilhafterweise eine sogenannte Festplatte (Hard Disk).

In einer weiteren besonders vorteilhaften Ausgestaltung der Erfindung weist die erfindungsgemäße Vorrichtung ferner wenigstens eine Einrichtung (Conditional Access Modul) zur Entschlüsselung digitaler Daten und/oder digitaler Rundfunksignale auf.

Vorteilhafterweise stellt die wenigstens eine Schnittstelle zur Bereitstellung von Audio- und/oder Videosignalen der erfindungsgemäßen Vorrichtung Videosignale in einem High-Definition-Format (HD) und/oder in einem Standard-Definition-Format (SD) bereit, vorzugsweise mit einer Bildauflösung von 1920 mal 1080 Bildpunkten (HD) oder 720 mal 576 Bildpunkten (SD).

Eine weitere vorteilhafte Ausgestaltung der erfindungsgemäßen Vorrichtung ist dadurch gekennzeichnet, dass die wenigstens eine Einrichtung (Transcoder) zur Transkodierung von Audio- und/oder Videoinformationen aufweisenden Medienobjekten von einem Quellformat in wenigstens ein Zielformat und/oder die wenigstens eine Einrichtung (Decoder) zur Dekodierung von Audio- und/oder Videoinformationen aufweisenden Medienobjekten Medienobjekte gemäß einem MPEG-1-Standard, gemäß einem MPEG-2-Standard und/oder gemäß einem MPEG-4-Standard verarbeitet.

Vorteilhafterweise ist die wenigstens eine externe Einrichtung zur Wiedergabe von Audio- und/oder Videosignalen ein Fernsehgerät oder dergleichen geeignet ausgebildete Einrichtung.

Da die erfindungsgemäße Vorrichtung vorzugsweise für einen stationären Betrieb vorgesehen ist, weist eine vorteilhafte Ausgestaltung der Vorrichtung vorteilhafterweise einen Anschluss für eine externe Energieversorgung auf. Eine Ausführungsvariante der Erfindung sieht ferner zumindest eine Backup-Batterie oder einen Backup-Akkumulator vor. Vorteilhafterweise ist durch zusätzliche Nutzung einer Batterie beziehungsweise einen Akkumulator ein unterbrechungsfreier Betrieb der Vorrichtung möglich. Eine weitere vorteilhafte Ausführungsvariante der erfindungsgemäßen Vorrichtung sieht Mittel zum Schutz vor Überspannungen vor, wodurch beim Betrieb der Vorrichtung über das Stromnetz die Gefahr einer Beschädigung der Vorrichtung durch starke Schwankungen im Versorgungsnetz vorteilhafterweise verringert beziehungsweise verhindert ist.

Gemäß einer weiteren vorteilhaften Ausgestaltung der Erfindung weist die erfindungsgemäße Vorrichtung wenigstens eine weitere Schnittstelle zum Anschluss von weiteren externen Geräten und/oder Einrichtungen durch ein serielles Bussystem auf. Als serielles Bussystem kommen vorzugsweise USB (USB: Universal Serial Bus) oder Firewire zum Einsatz. Vorteilhafterweise werden an der weiteren Schnittstelle angeschlossene Geräte und/oder Einrichtungen automatisch erkannt und sind unmittelbar nach Anschluss an der Schnittstelle der erfindungsgemäßen Vorrichtung nutzbar.

Eine weitere vorteilhafte Ausgestaltung der erfindungsgemäßen Vorrichtung sieht eine Schnittstelle zur Nutzung von Speicherkarten, wie CompactFlash (CF), SD-Memory-Card, Multimedia Card (MMC) und/oder der gleichen Speichermedien vor. Für eine exklusivere Ausführung der erfindungsgemäßen Vorrichtung ist ferner wenigstens eine drahtlose Schnittstelle zum Anschluss weiterer externer Geräte und/oder Einrichtungen vorgesehen, vorzugsweise eine WLAN-, Bluetoothund/oder Infrarotschnittstelle. In einer weiteren vorteilhaften Ausgestaltung der erfindungsgemäßen Vorrichtung weist diese ferner wenigstens eine Schnittstelle, vorzugsweise eine USB-Schnittstelle, auf, die zum Anschluss eines Massenspeichermediums ausgebildet und/oder eingerichtet ist.

Eine weitere vorteilhafte Ausgestaltung der erfindungsgemäßen Vorrichtung ist gekennzeichnet durch S-Video, Composite, Component, RGB und/oder VGA als Schnittstelle zum Anschließen wenigstens einer externen Wiedergabeeinrichtung. S-Video und RGB sind vorteilhafterweise vergleichsweise stark verbreitet und ermöglichen so einen Anwendung der erfindungsgemäßen Lösung auch an bzw. mit älteren Wiedergabeeinrichtungen. Zudem bieten S-Video sowie RGB vergleichsweise kostengünstig eine relativ gute Wiedergabequalität. Ein Anschluss einer Wiedergabeeinrichtung an der Schnittstelle der erfindungsgemäßen Vorrichtung kann dabei insbesondere mittels Cinch-Steckern, Scart- und/oder VHF- beziehungsweise UHF-Steckverbindern oder dergleichen geeigneter Verbindungen erfolgen. Eine besonders bevorzugte Ausgestaltung der Erfindung sieht eine Ausführungsvariante mit wenigstens einer Schnittstelle gemäß einem digitalen Standard, wie DVI (Digital Visual Interface) oder HDMI (High Definition Multimedia Interface) vor.

In einer weiteren besonders vorteilhaften Ausführungsvariante der erfindungsgemäßen Vorrichtung ist die Vorrichtung nach Art einer Set-Top-Box ausgebildet, die vorzugsweise auf oder zumindest nahe bei der externen Wiedergabeeinrichtung platzierbar ist. Die erfindungsgemäße Vorrichtung weist dabei vorzugsweise ein im Wesentlichen geschlossenes Gehäuse auf, wobei die Schnittstellen, insbesondere die wenigstens eine Schnittstelle zum Anschließen wenigstens einer Eingabeeinrichtung und die wenigstens eine Schnittstelle zum Anschließen wenigstens einer Wiedergabeeinrichtung von außen zugänglich sind. Des Weiteren weist die erfindungsgemäße Vorrichtung vorteilhafterweise wenigstens ein Bedienelement, vorzugsweise in Form eines Wipp-, Kipp- oder Rastschalters, auf, mittels dem die Vorrichtung in den Betriebszustand versetzbar und/oder steuerbar ist. Ferner verfügt die Vorrichtung vorzugsweise über wenigstens ein Signalisierungselement, vorzugsweise in Form einer LED (LED: Light Emitting Diode) oder einem Display (LCD), welches insbesondere den Betriebs- und/oder den Funktionszustand der Vorrichtung signalisiert.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer perspektivischen Darstellung ein Ausführungsbeispiel für eine erfindungsgemäße Vorrichtung; und
- Fig. 2: ein Blockschaltbild zur schematischen Darstellung von grundsätzlichen Bestandteilen eines Ausführungsbeispiels einer erfindungsgemäßen Vorrichtung.

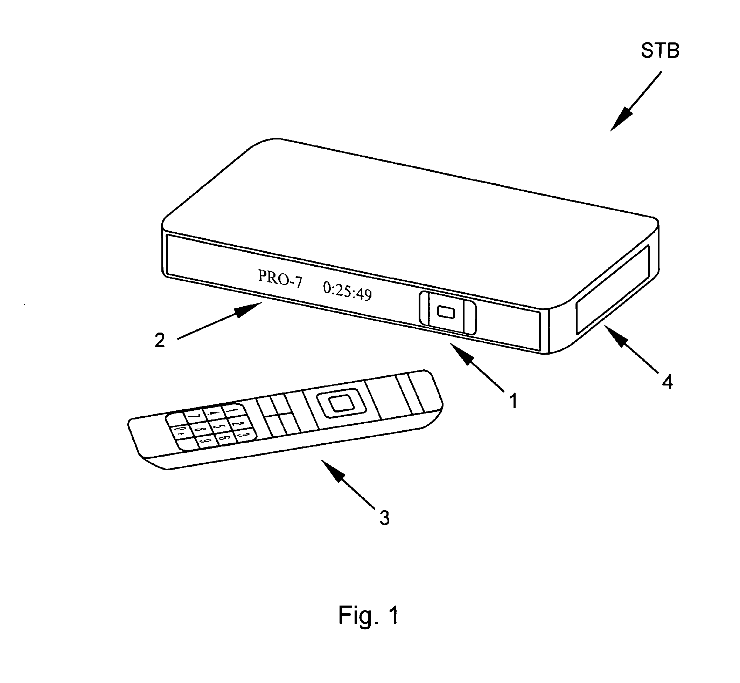

Fig. 1 zeigt in einer perspektivischen Darstellung ein Ausführungsbeispiel einer erfindungsgemäßen Vorrichtung STB zur Zuspielung von Audio- und/oder Videosignalen an wenigstens eine - hier nicht dargestellte - externe Einrichtung zur Wiedergabe von Audio- und/oder Videosignalen, vorliegend insbesondere einem Fernsehgerät. Die Vorrichtung STB ist vorliegend in Form einer sogenannten Set-Top-Box (STB: Set-Top-Box) mit kompakten Abmessungen ausgebildet. An der Vorderseite des Gehäuses der Vorrichtung STB weist diese neben Bedienelementen 1 zum Ein- bzw. Ausschalten und zur Steuerung der Vorrichtung STB eine Anzeigeeinrichtung 2 zur optischen Wiedergabe von Informationen, insbesondere umfassend Funktionsstatus-, Programm- und/oder Zeitinformationen wie Datum und/oder Uhrzeit, auf. An der Rückseite des Gehäuses der Vorrichtung STB weist diese verschiedene - hier nicht dargestellte - Anschlüsse bzw. Schnittstellen als Ein- und/oder Ausgänge zum Anschluss von Energieversorgung, Breitband-Internetzugang, analoger und/oder digitaler Rundfunksignale, externer Einrichtungen zur Wiedergabe von Audio- und/oder Videosignalen, externer Einrichtungen zur Speicherung von Audio- und/oder Videosignalen und/oder dergleichen Peripherieeinrichtungen auf, die nachfolgend noch näher spezifiziert werden. Wie Fig. 1 zeigt, weist die Vorrichtung STB vorliegend ferner eine nach Art einer kabel- bzw. leitungsungebundenen Fernbedienung 3 ausgebildete Eingabeeinrichtung 3 zur Steuerung der Vorrichtung und/oder zur Steuerung der wenigstens einen externen Einrichtung zur Wiedergabe von Audio- und/oder Videosignalen auf. Die Vorrichtung STB und die Eingabeeinrichtung 3 sind dazu vorliegend ausgebildet und/oder eingerichtet Infrarot-, und/oder W-LAN-Schnittstellen zur Kommunikation miteinander zu nutzen.

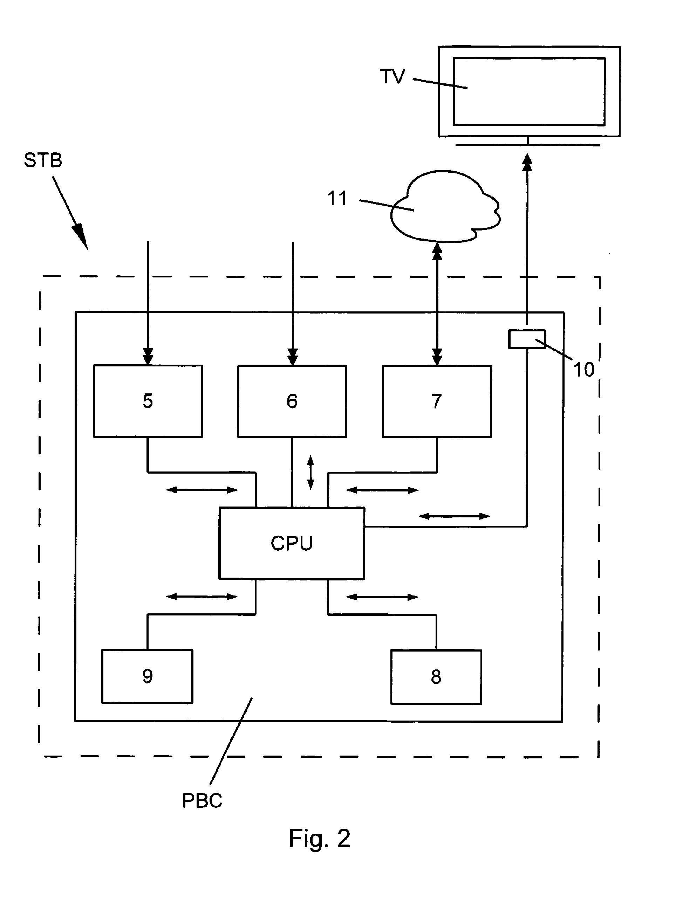

Wie das Blockschaltbild gemäß Fig. 2 eines Ausführungsbeispiels einer Vorrichtung STB zur Zuspielung von Audio- und/oder Videosignalen an wenigstens eine externe Einrichtung zur Wiedergabe von Audio- und/oder Videosignalen, zeigt, weist diese auf einer in einem Gehäuse angeordneten Platine (PCB) neben einer zentralen Steuereinrichtung CPU (CPU: Central Processing Unit) die insbesondere zur Steuerung der Einrichtungen der Vorrichtung STB und deren Kommunikation untereinander ausgebildet und/oder eingerichtet ist, auf
- eine Einrichtung 5 zum Empfang analoger Rundfunksignale,
- eine Einrichtung 6 zum Empfang digitaler Rundfunksignale,
- eine Einrichtung 7 zum Empfang und zum Senden digitaler Daten über einen Breitband-Internetzugang 11,
- einen Transcoder 8 zur Transkodierung von Audio- und/oder Videoinformationen aufweisenden Medienobjekten von einem Quellformat in wenigstens ein Zielformat,
- einen Decoder 9 zur Dekodierung von Audio- und/oder Videoinformationen aufweisenden Medienobjekten, und
- eine Schnittstelle 10 zur Bereitstellung von Audio- und/oder Videosignalen an einer externen Einrichtung TV zur Wiedergabe von Audio- und/oder Videosignalen, vorliegend einem Fernsehgerät.

In Fig. 2 sind weitere Baugruppen, Komponenten und/oder Schnittstellen der Vorrichtung STB aus Gründen der Übersichtlichkeit und Klarheit nicht explizit dargestellt. Derartige Baugruppen, Komponenten und/oder Schnittstellen der Vorrichtung STB werden nachfolgend noch näher beschrieben und erläutert.

Ein konkretes Ausführungsbeispiel einer Vorrichtung STB zur Zuspielung von Audio- und/oder Videosignalen an wenigstens einer externen Einrichtung zur Wiedergabe von Audio- und/oder Videosignalen wird nachfolgend anhand Einzelner in dieser integrierter Baugruppen und Komponenten sowie deren Funktionsweisen näher erläutert. Dem Fachmann sind die dabei verwendeten englischsprachigen Begriffe und Abkürzungen geläufig und dienen nachfolgend der besseren Verständlichkeit der Erfindung.

Die Vorrichtung STB hat folgende Charakteristika:

| **Hardware:** | **STB:** |
|---|---|
| Chipset | ST 7105 |
| Transcoder Chipset | XC 4015 |
| DVB-S2 | Dual |
| Analogue Cable Tuner | Dual |
| Fast Ethernet | 3 |
| Smart Card Reader | 1 |
| RAM DDR | 512 MB |
| SD Reader | 1 |
| Harddrive | Rackable 2,5" with 320 GB |
| USB | 3 (1 front; 2 back) |
| Flash | 8MB NOR / 256MB NAND |
| HDMI | 1 |
| SCART | 2 |
| Optical SPDIF | 1 |
| RCA Audio L/R | 1 |

Die Charakteristika der Vorrichtung STB werden nachfolgend in gegliederter Form näher spezifiziert:

### 1. Set-Top-Box STB

Die Vorrichtung STB ist für die folgenden Smartcard-basierten CAS-Systeme (CAS: Conditional Access System) ausgebildet und/oder eingerichtet: NDS (NDS: News Digital Systems), Nagravision, Irdeto, Conax und/oder einer Auswahl eingebetteter CAS für ein Gebiet eines Territoriums.

### 1.1 System on a Chip SoC

Chipsatz (chipset) ist der ST 7105 der Firma STMicroelectronics.

### 1.2 Video Codecs

| | | |
|---|---|---|
| Multiplex | | CD ISO/IEC 13818-1 |
| MPEG1 video | | CD ISO/IEC 11172-2 |
| Auflösung (Resolution) | | 1920*1080 - 720*576 -704*576 -544*576 - 480*576 352*576 -382*288, progressive only 25 and 30 Hz frame rates |
| Minimum Bitrate | | 32 Kb/s |
| Maximum Bitrate | | 15 Mb/s |
| MPEG2 MP@ML, MP@HL and video extensions | | CD ISO/IEC 13818-2 |
| Main Level (SD) | Auflösung (Resolution) | 720*576 - 704*576 - 544*576 - 480*576 352*576 - 352*288, interlaced, 25 Hz & 30Hz frame rates |
| | Minimum Bitrate | MPEG2 Compliant |
| | Maximum Bitrate | 15 Mb/s |
| | Formats | 4/3 (pan scan and letter box support) & 16/9 |
| High Level (HD) | Auflösung (Resolution) | 1080i: 1920x1080, interlaced, 50 Hz & 60 Hz frame rates 720p: 1280x720, progressive, 25 Hz & 30 |
| | | Hz frame rates |
| | Minimum Bitrate | MPEG2 compliant |
| | Maximum Bitrate | 25 Mb/s |
| MPEG 4 Part 10 : HP@L4, MP@L4 | | ITU-T H.264 \| ISO/IEC 14496-10 |
| Auflösung (Resolution) | | CIF / QCIF / SD / HD (compliant with the resolutions of level 4) e.g. for HD 1080i: 1920x1080, interlaced, 25 Hz & 30Hz frame rates 720p: 1280x720, progressive, 50 Hz & 60 Hz frame rates |
| Minimum Bitrate | | MPEG4 compliant |
| Maximum Bitrate | | 30 Mb/s |
| MPEG 4 Part 2 | | DivX v3.11,4,5,6, Xvid |
| Formats | | 4/3 (only for SD contents) & 16/9 (HD & SD) (pan scan and letter box support) |
| MPEG 4 Part 2 (ASP@L5) | | ITU-T H.26L \| ISO/IEC 14496-2 |
| Resolution | | CIF / QCIF / SD |
| Minimum Bitrate | | MPEG4 compliant |
| Maximum Bitrate | | 4 Mb/s |
| WM9/VC1 MP@HL, AP@L3 | | SMPTE 421 M |
| Auflösung (Resolution) | | CIF / QCIF / SD / HD |
| Minimum Bitrate | | VC1 compliant |
| Maximum Bitrate | | 30 Mb/s (t.b.c) |
| Formats | | 4/3 (pan scan and letter box support) & 16/9 |
| FLV1 (VP6) | | Flash Video Player applications |
| MJPEG | | |
| Others | | Sorenson Spark (SD format only) |
| (optional) Real Video | | V1.0, V2.0, V3.0, V4.0 |
| Video outputs | | Simultaneous video output HD & SD e.g. |
| | | via HDMI and Scart, graphics layer approach t.b.d. |
| SD / HD Conversion | | Up-conversion SD ->HD |
| | | Down-conversion HD ->SD |
| HD Resolution Conversion | | Conversion between 1080p , 1080i, 720p |
| HD Resolution Supported | | • 720p |
| | | • 1080 up to i23-97, i25, i30 |
| | | • 1080 up to p23-97, p24, p25, p30, p50 (display only), p60 (display only) |
| OSD and video resize | | • Linear Scale from x1/8 to x32 factor, sampling accuracy 1/256 pixel |
| | | • Position of resized video anywhere on the screen, HD or SD, independently of what it's done with OSD. |
| | | • Same feature with OSD, independently of what it's done with video plane |
| Multiple Decode | | Ability to decode several streams simultaneously |
| | | • 4 SD |
| | | • 1SD +1 HD (1080i) |
| | | • 2 HD (720p) |
| PIP | | Ability to decode 2 streams and to embed the resized video above the other one. PIP original source can be either HD or SD. Limitations exist on the combination of 1*HD and 1*SD streams with simultaneous decoding and specific encoding parameters, use of trick modes and re-sizing. PIP specification t.b.d.. |
| Decode + Record | | Ability to decode stream (SD/HD) and record other (SD/HD) on internal/external media |
| Record | | Abililty to record a stream with following operations: |
| | | • Transrating (bitrate / Resolution). |
| | | • Downscaling HD -> SD |
| | | • Transcoding MPEG2 -> MPEG4 |

### 1.3 Audio Codecs

| Multiplex | CD ISO/IEC 13818-1 |
|---|---|
| MPEG1 layer 1 and layer 2 audio | CD ISO/IEC 13818-3 and ISO/IEC 11172-3 |
| Sampling Frequency | Layer I :32,44.1, 48 kHz mono and stereo Layer II : 16 kHz, 22.5 kHz, 24 kHz, 32 kHz, 44.1 kHz, and 48 kHz mono and stereo |
| Modes | • single channel |
| | • dual channel |
| | • joint stereo |
| | • stereo |
| Audio Bitrate | • MPEG1 LAYER 1: 32 to 448kbps |
| | • MPEG2 LAYER 1: 32kbps to 448kbps |
| | • MPEG2 LAYER 2: 8kbps to 448kbps |
| MPEG1 layer 3 audio | CD ISO/IEC 13818-3 and ISO/IEC 11172-3 |
| Samplinq Frequency | 32, 44.1, 48 kHz mono and stereo |
| Modes | • single channel |
| | • dual channel |
| | • joint stereo |
| | • stereo |
| Audio Bitrate | LAYER 3: 32 to 320 Kb/s |
| MP3 pro (MP3 + SBR) | Hardware ready |
| Dolby Digital and Dolby Digital+ | BS.1196-1 et ISO/IEC 13818-3 |
| Dolby Digital | Downmixing / loop through Dolby Digital 2.0 and AC3 5.1 (pass through SPDIF/HDMI and stereo downmix), AC3+ (Dolby Diqital +) transcoding AC3 (TBD) |
| Dolby Digital + | Downmixing / Dolby Digital conversion on SPDIF / Inserted in HDMI |
| Bitrate | 8 to 448 Kb/s |
| Audio MPEG 2/4 AAC - LC | Hardware ready ISO/IEC 13818-7 |
| MPEG-4, ISO/IEC 14496-3 | HE AAC (v1 and V2) and AAC+ (stereo and multichannel) |
| Bitrate | 8 to 448 Kb/s |
| AAC+ ( AAC + SBR ) | hardware ready |
| Windows Media Audio | WMA Standard & WMA Pro |
| Linear Pulse Code Modulation | 2 Channels |
| Others (optional) | • Mpa and mp4 |
| | • PCM, Wave |
| | • DTS |
| | • DTS Audio |
| | • DTS HD |
| | • FLAC |
| | • Vorbis |
| | • Real Audio |
| Formats management | |
| Down conversion DD/AAC to Stereo | To every analogical and digital outputs |

### 1.4 Containers

Für Medienobjekte sind mit der erfindungsgemäßen Vorrichtung STB zur Zuspielung von Audio- und/oder Videosignalen an wenigstens eine externe Einrichtung zur Wiedergabe von Audio- und/oder Videosignalen vorteilhafterweise folgende Formate verwendbar:
.avi
.divx
.qt und/oder .mov
.mpa und/oder .mpa2 und/oder .mp3
.ogg und/oder .ogm und/oder .oga und/oder .ogv
.aiff
.wave
.ts
.mpg und/oder .mpeg und/oder .m2v
.aac und/oder .m4a und/oder .mp4
.asx und/oder .asf und/oder .wmv und/oder .wma
Audio CD
SVCD und/oder VCD Video
.m2t und/oder .m2ts und/oder .mts
.3gp
Microsoft DVR-MS
.flv und/oder .swf
.m3u und/oder .pls und/oder .cue und/oder .strm
.rm und/oder .ram und/oder .ra und/oder .rv und/oder .rmvb
.mkv
DVD Video

### 1.5 Verschlüsselungsalgorithmen (Encryption Algorithm)

Mit der erfindungsgemäßen Vorrichtung STB zur Zuspielung von Audiound/oder Videosignalen an wenigstens eine externe Einrichtung zur Wiedergabe von Audio- und/oder Videosignalen sind vorteilhafterweise folgende Verschlüsselungsalgorithmen anwendbar:
AES
DES
Triple DES
DVB-CSA 1
NSA (software solution)
RSA keys (private / public) (software solution)

### 2. Front End Modul

Die erfindungsgemäßen Vorrichtung STB zur Zuspielung von Audiound/oder Videosignalen an wenigstens eine externe Einrichtung zur Wiedergabe von Audio- und/oder Videosignalen weist ein Front End Modul auf, welches unterschiedliche Demodulations-Fähigkeiten unterstützt, insbesondere umfassen DVB-S2, DVB-T und analogue cable.

Dabei kommen je nach Ausgestaltung sowohl Dual- als auch Quad Demodulatoren zum Einsatz. Alle AV-Ausgänge (AV outputs) sind vorteilhafterweise MPEG2 Transport Streams.

Die Vorrichtung STB unterstützt vorteilhafterweise sowohl dual DVB-S2 und dual analogue cable auf dem selben Modul.

### 2.1 Analogue Cable Tuner und Demodulator

Dual Analogue Cable Tuner:

| | | |
|---|---|---|
| | Input Connector | IEC 169-2 Female |
| | Impedance | 75 ohms |
| HF Input | Input RF Range-Analogue TV | 126.25 - 294.25 MHz (DVB-C 303.25-862 MHz) |
| | Input level Slot | -25 dBm to -57 dBm |
| | TOS | < -8 dB |
| | Noise Figure | < 7dB |
| | Adjacent Channel Protection | > 35 dB |
| | Channel Bandwidth | 8Mhz & 7Mhz |

### 2.2 DVB-S2 Tuner und Demodulator

Dual DVB-S2 Tuner:

| | | |
|---|---|---|
| RF Input | RF input spectrum | 950 - 2150 MHz |
| | Symbol rates | variable 15 to 31.5 MSymbol/S |
| | Constellations | QPSK, 8PSK |
| | LDPC FEC | 1/4, 1/3, 2/5, 1/2, 3/5, 2/3, 3/4, 4/5, 5/6, |
| | LNB regulator | DISEqC 1.2 , 350mA max. |
| | Input Connector | IEC 169-24 F-type Female |
| | Impedance | 75 ohms |
| | Input RF Range | 950 - 2175 MHz |
| | Input level Slot | -25 dBm to -65 dBm |
| | TOS | < - 8 dB |
| | Noise Figure | < 7dB |
| | Adjacent Channel Protection | > 35 dB |
| | Unicable Support | SCR CENELEC EN50494 |

### 3. Ethernet Switch und Ports

| | | |
|---|---|---|
| Input/Output RJ45 Connectors | drei Ports ohne LEDs IEEE standard 802.3Base T RJ45 10/100 Mbit/s Auto-MDIX Auto Sensing WAKE ON LAN feature | |
| Fast Ethernet Switch | Fast Ethernet Interfaces | |
| | | • Three RJ45 Ports • WiFi interface (optional) • SoC |

### 4. Video Outputs

### 4.1 SCART

Der TV-Scart-Anschluss stellt ein PAL- oder Secam-Signal bereit mit:
• Video: RGB out und CVBS
• Audio: Audio R/L

Der Aux-Scart-Anschluss stellt einen PAL- oder Secam-Output bereit mit:
• Video: Y/C in/out und CVBS
• Audio: Audio R/L

Die Vorrichtung STB implementiert ein Durchschleifen (loop through) zwischen VCR und TV Scart.

Das PAL-Signal überträgt:
• TELETEXT CEEFAX
• WSS (ETSI EN 300 294 V1.4.1 2003-04)

### 4.2 HDMI

Die HDMI Implementierung genügt der HDMI Specification V1.3 und unterstützt HDCP V1.1.

Die HDMI Detektion ist in der Lage die TV-Charakteristika (SD-Auflösung, HD-Auflösung) zu setzen bzw. zu bestimmen und dann deren Video Output Format zu adaptieren.

Es ist ferner kompatibel mit HDMI zu DVI Adaptern.

### 5. Audio

### 5.1 Analgoue Connector

Die Vorrichtung STB weist zwei RCA-Anschlusse (RCA connectors) auf:
• weiß für links / mono audio track
• rot für rechts track

### 5.2 Digital Connector

Die Vorrichtung STB weist einen optischen digital audio-Anschluss (SPDIF) auf, der kompatibel ist mit:
• I EC-958 type II
• Unterstützt die Sampling Frequenzen: 32 kHz, 44,1 kHz, 48 kHz
• Optischer Anschluss (optical connector)

### 6. Hard Disk

Die Vorrichtung STB weist als vorzugsweise austauschbare Einrichtung zur Speicherung von digitalen Daten eine Festplatte im 2,5 Zoll-Format (2.5 inches) auf.

Die Festplatte wird von der Vorrichtung STB verwendet für sogenanntes Time Shifting, Instant Replay, Recording, Push of Contents, PVR und/oder Firmware rescue storage.

Die Festplatte (Hard Disk) ist austauschbar, so das der Nutzer diese einfach selbst aus dem Gehäuse der Vorrichtung STB entfernen kann. Fig. 1 zeigt auf der rechten Gehäuseseite der Vorrichtung STB einen dazu ausgebildeten und/oder eingerichteten Einschubschacht 4 für die Festplatte.

Auf der Festplatte gespeicherte Inhalte sind in unverschlüsselt, es sei denn die original Inhalte sind unter Kontrolle eines CA-Systems, welches die original Rundfunksignale oder IP-Medienströme verschlüsselt, so das die Inhalte ebenfalls entsprechend verschlüsselt auf der Festplatte gespeichert werden. So werden beispielsweise Inhalte die der Nutzer selbst generiert hat und Inhalte eines öffentlichen Rundfunkdienstleisters wie beispielsweise der ARD auf der Festplatte unverschlüsselt gespeichert, während verschlüsselte lineare IPTV-Kanäle (encrypted linear IPTV channels) und VOD auf der Festplatte als verschlüsselte Daten gespeichert werden.

Für den Fall, dass ein irreparabler Fehler seitens der Vorrichtung STB auftritt, kann der Nutzer die Festplatte behalten und mit einer Ersatz- bzw. Austausch-Vorrichtung STB wieder- bzw. weiterverwenden. In diesem Fall sind alle unverschlüsselten Inhalte und linear verschlüsselten IPTV-Inhalte verfügbar. Nur VOD-Inhalte sind dann nicht weiter verfügbar. Der Nutzer kann so vorteilhafterweise mehrere Festplatten (HDDs) für jede der Vorrichtungen STB verwenden. Für den Fall eines Haushalts mit mehreren Vorrichtungen STB (multiple STBs) ist es möglich jede der Festplaten mit jeder Vorrichtung STB zu nutzen.

Der Mechanismus zum Entfernen der Festplatte aus dem Einschubschacht 4 des Gehäuses der Vorrichtung STB bzw. zum Einsetzen der Festplatte in den Einschubschacht 4 des Gehäuses der Vorrichtung STB ist robust ausgebildet und für eine einfache Nutzung ausgelegt, wobei vorzugsweise wenigstens 5000 Einsatz- bzw. Entnahmevorgänge ermöglicht sind.

Die Festplatte ist vorteilhafterweise auch als externe Festplatte an eine andere Einrichtung, vorzugsweise einen Computer (PC) anschließbar. Dazu kann die Festplatte vorteilhafterweise über einen SATA-Anschluss mit einem SATA-Kabel mit der anderen Einrichtung (PC) verbunden werden. Vorteilhafterweise ist auf verschlüsselt auf der Festplatte gespeicherte Daten aus Sicherheitsgründen außerhalb einer Vorrichtung STB nicht zugreifbar.

Die Festplatte weist beispielsweise folgende Charakteristika auf:

| | |
|---|---|
| Kapazität | 320 GB |
| Platters | 1 |
| Interface | SATA |
| Acoustical Value outside the STB | < 21 dBA at 1 metre in operating |
| | mode < 19 dBA at 1 metre in idle mode |
| Operating temperature (max) | 65°C |
| RPM. | 5400 |
| Hardware pairing mechanism der STB und der Festplattensicherungssystem (HD secure system) | Controlled by the CA system |
| Gehäuse | Same HW Platform / Casing for No hard disk STB and hard disk STB |
| | Same HW Platform / Casing for hard disk STB with different storage capacity |
| Partition Format | XFS |
| | NTFS (Read & Write) |
| | FAT, FAT32, VFAT (Read & Write) |
| | Ext2 (Read & Write) |
| | Ext3 (Read & Write) |
| Hard Drive management tools Limits of Hard Disk concerning the Read / Write of contents (HD or SD) | Failure / Temperature APIs |
| MTBF | > = 1 000 000 hours |

### 7. Kopierschutz (Copy Protection)

### 7.1 HDCP (digital output)

Der HDMI output ist vorteilhafterweise kompatibel mit dem HDCP System revision 1.3.

HDCP V1.1 wird ebenfalls unterstützt, wenn der HDMI output mit einem DVI input verbunden ist.

### 7.2 Copy Protection (Scart output)

Die analogen Videoausgänge (analogue video outputs) haben vorteilhafterweise Macrovision, zumindest Version 7.01, implementiert.

Vorteilhafterweise ist das Merkmal Macrovision als Hardware-Lösung implementiert. Eine Software-Lösung ist alternativ und/oder ergänzend möglich und kann vorteilhafterweise durch eine Anwendung aktiviert werden.

Die Vorrichtung STB ist CGMS/A kompatibel.

### 7.3 Audio Copyright Management

Die Software der Vorrichtung STB ist vorteilhafterweise in der Lage Urheberrechte (copyrights) und Kopierberechtigungsbits (copy authorization bits) für analoge Audioausgänge (analogue audio outputs (WSS)) und digitale Audioausgänge (digital outputs (IEC60958) ) zu modifizieren.

Diese Bits werden vorteilhafterweise als Voreinstellung gesetzt, um ein Kopieren zu authorisieren.

### 8. Audio / Video Matrix

### 8.1 Video Matrix

Die nachfolgende Video Matrix gilt für alle Ausgangsquellen der Vorrichtung STB, vorliegend also für HDMI und für SCART:

| | | **HDMI Output** | **TV Scart Output** | | **VCR Scart Output** | |
|---|---|---|---|---|---|---|
| **Stream** | | | **HDMI Connected** | **HDMI Not Connected** | **HDMI Connected** | **HDMI Not Connected** |
| **HD or SD Up converted** | **SIGNAL** | HD/SD | SD RGB-CVBS | SD RGB-CVBS | SD CVBS - Y/C | SD CVBS - Y/C |
| | **ASPECT RATIO** | Available | Available | Available | Available | Available |
| | **OSD** | Available | Available | Available | Available | Available |
| | **Subtitles** | Available | Available | Available | Available | Available |
| **SD** | **SIGNAL** | SD | SD RGB-CVBS | SD RGB-CVBS | SD CVBS - Y/C | SD CVBS - Y/C |
| | **ASPECT RATIO** | Available | Available | Available | Available | Available |
| | **OSD** | Available | Available | Available | Available | Available |
| | **Subtitles** | Available | Available | Available | Available | Available |

### 8.2 Audio Matrix

Audiomatrix Matrix der Vorrichtung STB:

| **Component** | | **Input Stereo** | **Input AAC Multi Channel** | **Input AC3 Multi Channel** | **Input AC3+ Multi Channel** |
|---|---|---|---|---|---|
| **SPDIF** | Output 1 | PCM (MPEG decoded) | AAC transcoded to DTS | AC3 not decoded | AC3+ transcode to AC3 not decoded |
| | Output 2 | PCM (MPEG decoded) | PCM (AAC decoded) | PCM (AC3 decoded) | PCM (AC3+ decoded) |
| | Volume Control | Adjustable Audio Level | Fixed Audio Level | Fixed Audio Level | Fixed Audio Level |
| **L/R** | Output | Stereo (PCM + DAC) | Stereo (AAC Downmixing +DAC) | Stereo (AC3 Downmixing+ DAC) | Stereo (AC3+ Downmixing +DAC) |
| | Volume Control | Adjustable Audio Level | Adjustable Audio Level | Adjustable Audio Level | Adjustable Audio Level |
| **HDMI** | Output 1 | PCM (MPEG decoded) | AAC transcoded to DTS | AC3 not decoded | AC3+ not decoded |
| | Output 2 | PCM (MPEG | PCM (AAC decoded) | PCM (AC3 decoded) | PCM (AC3+ decoded) |
| | | decoded) | | | |
| | Volume Control | Adjustable Audio Level | Fixed Audio Level | Fixed Audio Level | Fixed Audio Level |
| **TV SCART** | Output | Stereo (PCM + DAC) | Stereo (AAC Downmixing + DAC | Stereo (AC3 Downmixing+ DAC) | Stereo (AC3 Downmixing +DAC) |
| | Volume Control | Adjustable Audio Level | Adjustable Audio Level | Adjustable Audio Level | Adjustable Audio Level |
| **VCR SCART** | Output | Stereo (PCM + DAC) | Stereo (AAC Downmixing +DAC) | Stereo (AC3 Downmixing+ DAC) | Stereo (AC3 Downmixing +DAC) |
| | Volume Control | Adjustable Audio Level | Adjustable Audio Level | Adjustable Audio Level | Adjustable Audio Level |

Die Allgemeine Lautstärkekontrolle der Vorrichtung STB ist vorteilhafterweise gemeinsam für alle Audioausgänge (audio outputs).

### 9. Temperatursensor (Temperature Sensor)

Die Vorrichtung STB weist vorteilhafterweise einen auf der Platine (PCB) der Vorrichtung STB integrierten Temperatursensor auf. Alternativ und/oder ergänzend kann vorteilhaferweise ein auf der Festplatte vorhandener Temperatursensor verwendet werden.

Mit dem Temperatursensor kann die Temperatur innerhalb des Gehäuses der Vorrichtung STB bestimmt werden, vorteilhafterweise mit einer dazu geeigneten API.

### 10. RAM Memory

Die Vorrichtung STB weist ein RAM Memory mit folgenden Merkmalen auf:

| | |
|---|---|
| Type of RAM Memory | DDR 2 |
| RAM Memory Storage | 512 MB |
| (Available memory to simultaneously HD stream + SD Stream decode , VODAFONE Application, CA execution, Graphical Resources Cache) | |
| RAM Memory Budget | Description of the RAM management if most of the memory is used (percentage taken by each software modules, application/video/UI/CAS...) |

### 11. NOR FLASH Memory

Die Vorrichtung STB weist ein NOR FLASH Memory mit folgenden Merkmalen auf:

| | |
|---|---|
| Type of FLASH Memory : | NOR (NASC certified) |
| Type of FLASH Sector Protection (Secure boot): | OTP. Possibility to lock the NOR FLASH sectors one by one, with password. |
| FLASH package | BGA |
| NOR FLASH Memory storage (Available for the boot loader) | 8 MB |

### 12. SLC NAND FLASH Memory

Die Vorrichtung STB weist ein SLC NAND FLASH Memory mit folgenden Merkmalen auf:

| | |
|---|---|
| Type of FLASH Memory : | NAND SLC (NASC certified) |
| Data Bus | 8 bits |
| FLASH packaqe | BGA |
| NAND FLASH Memory storage (Available memory for the OS, resident applications, middleware, HD and SD images, resources) | 256 MB |

### 13. Transcoder 8

Die Vorrichtung STB weist einen Transcoder 8 mit dem XC4105 Chipsatz der Firma ViXS Systems Inc. Vorteilhafterweise ist die Schnittstelle des Transcoders mit dem SoC implementiert.

Das EEPROM Memory, in welchem das Transcoder-Boot (ViXS boot) gespeichert ist, ist 64 kB groß.

Das für den Transcoder vorgesehene RAM Memory ist ein DDR3 Speicher mit 128 MB.

Die Hardware-Verschlüsselungsfunktionalitäten der Vorrichtung STB sind verfügbar für DTCP-IP-Unterstützung (DTCP-IP support) wenn Inhalte von externen Einrichtungen empfangen oder Inhalte an externe Einrichtungen geliefert bzw. übertragen werden. Die entsprechenden Schlüssel können werksseitig in der Vorrichtung STB gespeichert oder auf die Vorrichtung STB in diesen Bereich heruntergeladen werden.

Der Transcoder 8 der Vorrichtung STB weist folgende Eigenschaften bzw. Merkmale auf:

| | |
|---|---|
| Encoding Video Format | CCIR 656 -> H264 AVC SD und HD |
| Encoding Audio Format | MPEG-1 Layer II. AAC, AC3 |
| Transcoding Audio Format | H264 AVC -> ISO/IEC 13818-2 |
| | H264 AVC -> MPEG 4 Part 2 SP/ASP |
| | H264 AVC -> H264 AVC |
| | ISO/IEC 13818-2 -> ISO/IEC 13818-2 |
| | ISO/IEC 13818-2 -> H264 AVC |
| Transcoding Audio Format | MPEG-1 Layer II -> MPEG-1 Layer III |
| | MPEG-1 Layer II -> AAC |
| | MPEG-1 Layer II -> AMR-NB |
| | AC3 -> AMR-NB |
| | MPEG-1 Layer III -> AMR-NB |
| | MPEG-1 Layer III -> AAC |
| | AAC -> MPEG-1 Layer III |
| | AC3 -> MPEG-1 Layer II |
| | AC3 -> MPEG-1 Layer III |
| | AC3 -> AAC |
| Resolution Reduction | HD -> SD |
| | SD -> CIF |
| | CIF -> QCIF |
| Bitrate Reduction | 30 mbps -> 256kps |
| Frame rate | Capability to decrease the video frame rate ->10 frames /s |
| Interfaces Input / Output | I2C, USB 2.0, SPDIF |
| Transport Stream Input / Output | 2 TS input |
| | 1 TS output |
| Stream Format Conversion | TS -> TS; TS -> ES; TS -> MP4; ES -> TS; ES -> MP4. |
| RAM memory | DDR3 Dual 32Bits Interface, up to 128 Mbytes |
| Encryption engine | AES, DES, 3DES, SHA-1, OMAC |
| | DTCP/IP |
| | 2048 bits RSA Engine |
| Descramblinq | DVB-CSA |
| Decryption engine | DES/3DES/AES |
| | DTCP/IP |
| | 2048 bits RSA Engine |

### 14. External Video Encoder (optional)

Es ist vorteilhafterweise vorgesehen der Vorrichtung STB via des AUX SCART Anschlusses (AUX SCART connector) zugeführtes baseband video input zu kodieren. Die Vorrichtung STB nutzt dazu als Encoder einen SAA 7138, und gibt den resultierenden Transportstrom (transport stream) als Eingang auf einen Transportstromport (TS port) des ST7105. Das Video kann dann auf der Festplatte aufgezeichnet werden. Diese Option der Vorrichtung STB ist insbesondere für die Double-und Quad-DVB-T sowie die Quad-DVB-S2 Lösung der Vorrichtung STB vorgesehen.

Alternativ und/oder ergänzend können externe Einrichtungen vorteilhafterweise mittels des RF cable in Inputs an die Vorrichtung STB angeschlossen werden. Analoge Signale können via des normalen analogen Kabelsignalpfads mit einem Encoder kodiert werden, wozu der SAA 7138 dann nicht erforderlich bzw. benötigt ist.

### 15. Data Ports

### 15.1 Smart Card

Die Vorrichtung STB weist vorteilhafterweise einen Smart Card Reader auf, der vorzugsweise kompatibel ist mit einem Standard gemäß ISO 7816 part 1, 2, 3 und/oder 4. Der Smart Card Reader weist folgende Charakteristika auf:

| | |
|---|---|
| Minimum Intensity | >=50 mA |
| Bitrate | 9600 <= Bitrate <= 115200 |

### 15.2 USB Hub und Ports

Die Vorrichtung STB weist vorteilhafterweise wenigstens einen USB-Port auf, der vorzugsweise kompatibel ist mit der USB 2.0 Spezifikation. Die Energieversorgung an jedem USB-Port wird von der CPU des SoC verwaltet und liefert eine Überstrominformation (over current information) an die CPU um ein Überstrommanagement (over current management) zu ermöglichen.

Der USB-Port weist folgende Charakteristika auf:

| | |
|---|---|
| | • High Speed (480Mbits/s) |
| Speed Mode supported | • Full Speed (12Mbits/s) |
| | • Low speed (1.5Mbits/s) |
| | • USB rear panel : 1 A |
| | • USB rear panel : 0,5 A |
| Power Capabilities | The 1A could be supported by only one rear panel USB port |
| | • USB front panel : 0,5 A |
| USB Applications | • USB storage support for filesharing (via http,ftp,samba filesharing, |
| | • upnp) |
| | • USB webcam support (video recording, streaming, motion |
| | • detection) |
| | • USB printer support (printer sharing ,fax printing) |
| | • USB Hub support |
| | • USB Graphical LCD screen (OTG Philips Picture frame) |
| | • USB Alphanum LCD screen (Crystal Fontz, Matrix Orbital) support |
| | • "Wireless USB" dongle/host (NEC µPD720170) |
| | • USB to Ethernet controller support |
| | • USB bluetooth support |
| | • USB Wifi key A.P/client support (802.11 b/g/a , Zydas 1211) |
| | • USB HID (eq., keyboard, mouse) |
| USB Interfaces | • drei USB Ports |
| | • SD / MMC card |
| | • SoC |

### 15.3 SD High Capacity reader

Die Vorrichtung STB weist vorteilhafterweise einen SD High Capacity reader auf, der an einem USB-Port der Vorrichtung STB mittels USB an einen SD/MMC-Kontroller (SD/MMC controller) angeschlossen ist.

Der SD High Capacity reader der Vorrichtung STB ist kompatibel mit Secure Digital cards und verwendet dazu bei Bedarf einen Adapter. Der SD Host Controller genügt der SD Host Controller Simplified Specification Version 2.00.

Vorteilhafterweise sind keine SDIO-Treiber (SDIO drivers) erforderlich.

SD-Anwendungen (SD Applications) ermöglichen ein sogenanntes Multimedia storage, insbesondere für Video, Photo und/oder Audio.

### 16. IR Remote control support

Die Vorrichtung STB ist vorteilhafterweise ausgebildet, eine Steuerung derselben mittels einer Infrarot-Fernbedienung 3 (IR Remote control) zu ermöglichen. Dazu unterstützt die Vorrichtung STB Infrarot-Protokolle einer der Infrarot-Frequenz (IR frequency) von 36 KHz.

Vorteilhafterweise wird das Philips RCMM Protokoll (Philips RCMM protocol) verwendet. Dieses Protokol unterstützt vorteilhafterweise auch andere Einrichtungen, insbesondere draht- bzw. kabellose Tastaturen (wireless keyboards), Joysticks und/oder dergleichen Eingabeeinrichtungen.

Vorteilhafterweise unterstützt die Vorrichtung STB bei Bedarf ferner das RC6-Protokoll (RC6 protocol).

### 17. Standby und Full Feature Power Consumption Mode

Die Vorrichtung STB weist vorteilhafterinweise verschiedene Standby modes auf, insbesondere um spezifische Anwendungsfälle und/oder gesetzliche Anforderungen, beispielsweise den EU Code of Conduct, zu erfüllen. Eine Aktualisierung dieser Standby Modes ist vorteilhafterweise mittels eines Software Updates ermöglicht. Die Standby Modes werden nachfolgend näher spezifiziert.

### 17.1 Always on / configurable features

Basierend auf Standby Modes Anforderungen oder Konfigurationen können die Merkmale (features) separat aktiviert (enabled) bzw. deaktiviert (disabled) oder immer an (always powered on) sein:

| **Funktionen** | **Always on** | **Configurable** |
|---|---|---|
| IR Support | x | |
| HDMI CEC | x | |
| Timer Support | x | |
| Scart Slow Blanking | x | |
| Scart Loop Through | x | |
| Front panel keys | x | |
| SoC | | x |
| Front Panel display | | x |
| Ethernet Bridge Loopthrough | | x |
| HDD read/write | | x |
| Cable tuners (each) | | x |
| Sat tuners (each) | | x |
| IP connectivity | | x |
| WoL | | x |
| External devices (USB, SD) | | x |
| Smartcard | | x |
| TV Output | | x |
| Transcoder chipset (Vixs) | | x |

### 17.2 Standby modes transition reasons

Standby-Mode-Wechsel können durch die nachfolgenden Funktionen initiiert werden:

| **Funktionen** | |
|---|---|
| IR Support | x |
| HDMI CEC | x |
| Timer Support | x |
| Front panel keys | x |
| SoC | x |
| WoL | X |

### 18 Energieversorgungscharakteristika (Power Supply Characteristics)

Die Vorrichtung STB arbeitet vorliegend mit einer externen Energieversorgung (power supply) mit folgenden Merkmalen:

| | |
|---|---|
| Input Voltage | 12 V |
| Input Intensity | > 5 A |
| AC / DC Efficiency Rate | > 82% |
| DC / DC Efficiency Rate | > 83% |
| Connector Location | Rear Panel |
| Connector Type | PLC -> RJ 45 Power -> Power Din (cf power supply Specification) |

### 19. Werkseinstellungen (Factory parameters)

Die MAC-Adresse (MAC address), die Hardware-ID (hardware-id), die Produktseriennummer (product serial number), und eine eindeutige CA bezogene Information werden in dem geschützten FLASH Sector während des Produktionsprozesses gespeichert. Diese und optional weitere Informationen werden dem Betreiber bzw. Bereitsteller des Breitbandlnternetzugangs mit einer separaten Herstellungsdatei (manufacturing file) verfügbar gemacht.

| **Characteristics** | |
|---|---|
| MAC address | xx:xx:xx:xx:xx:xx (TBD) |
| Hardware id type | xxx-xx-xxx (TBD) |
| P/N type | PRNxxxxxxxx-xx (TBD) |
| Serial Number | IMEI Number 15 Digits |

Sich auf eine NDS Cardless CA Implementierung beziehende Daten werden vorteilhafterweise auf SoC secure slots und auf Flash Sector gespeichert.

Sich auf NDS, Nagravision, Irdeto, Conax und dergleichen Smart Card basierende CA Implementierungen beziehende Daten werden vorteilhafterweise auf SoC secure memory und auf Flash Sector gespeichert.

In einer besonders vorteilhaften Ausgestaltung der Erfindung weist die Vorrichtung STB Mittel bzw. Mechanismen auf, die es erlauben bzw ermöglichen die Vorrichtung STB im Werk oder seitens Reparaturstellen des Betreibers bzw. Bereitstellers des Breitband-Internetzugangs zu Testund/oder Service-Zwecken zu überprüfen, vorzugsweise ohne direkten Zugriff auf die Hauptplatine (PCB) haben zu müssen, das heißt insbesondere ohne das Gehäuse der Vorrichtung STB öffnen zu müssen. Diese Mittel bzw. Mechanismen sind vorteilhafterweise Nagra security kompatibel.

Seitens der Vorrichtung STB ist ferner die sogenannte serial link emulation via Scart implementiert. Die Konfiguration ist wie folgt:
- PIN 10, für Rx
- PIN 12, für Tx

Die Vorrichtung STB wird vorteilhafterweise mit einem Produktionssicherheitsmerkmal (Production Security feature) gefertigt. Die Anforderungen sind:
- Forbid JTAG Access
- Forbid Flash Change
- Forbid Flash and Data Access
- Forbid OTP FLASH Process

### 20. Mechanical Characteristics

### 20.1 Front Panel

| | |
|---|---|
| USB | 1 |
| SD Card | 1 |
| 4 Arrows button + OK + Menu + Back Button | Industrial design |

Die Vorrichtung STB weist an der Vorderseite (front panel) des Gehäuses der Vorrichtung STB als Eingabeeinrichtung 3 sieben Tasten (buttons) auf. Die sieben Tasten (buttons) sind nutzbar, wenn die Vorrichtung STB im Standby Mode ist. Mit Hilfe eines Multiplexers lassen sich Signale der sieben Tasten (buttons) an der Vorderseite (front panel) des Gehäuses der Vorrichtung STB in drei Signaleingaben zu dem Micro Controller kodieren.

Die Anzeigeeinrichtung (Display) der Vorrichtung STB weist folgende Merkmale auf:

| | |
|---|---|
| Manufacturer | FUTABA |
| Number of Digits | 16 |
| Type of Digits | Dot Matrix 7*5 |
| Color | White |
| Brightness and intensity level | Managed by software (three discrete values). |
| Display Dimension | 86mm *12 mm |
| Consumption | < 0,75W |
| Pictogramms | TBD |

### 20.2 General Operating Characteristics

| | |
|---|---|
| MTBF | MTBF: > 80 000 hours (RDF2000 @ 20°C - 24h/day) |
| Safety | EN60065 (1998) and EN60065 (2002) European CE marking |
| EMC | • EN 55 013 + A1 (2003) |
| | • EN 55 022 + A1 (2001) + A2 (2003) + E 55022 : 2006 |
| | • EN 55 020 + A1 (2003) |
| | • EN 55 024 and A1 (2001) +A2 (2003) |
| | • EN 61000-3-2 and EN61000-3-3 |
| | • W-LAN (Wifi) Radio channels EIRP |
| Communication Directive | EC/CE Label/Marking directive 93/68/EEC EC/CE Declaration of Conformity |
| OutsideTemperature Range | 10°C-45°C |
| ROHS & WEEE | ROHS-DEEE "EN 50419" |
| Energystar | Compliance with Energystar 2.0 efficiency Level V |
| Code of Conduct | Compliance with European Code of Conduct on Energy Consumption of Digital TV Services Compliance with European Code of Conduct on Efficiency of External Power Supplies |
| Maximum External Surface Temperature | @25°C ambient < 40°C |
| | @45°C ambient < 60°C |
| Storage Temperature Range | -25°C to 65° C |

### 21. WiFi capability

Die Vorrichtung STB weist vorteilhafterweise einen integrierten mini PCI connector auf, der WiFi-fähig ist. Der mini PCI connector wird vorteilhafterweise unter Verwendung von MII des Fast Ethernet Switch angeschlossen.

Die in den Figuren der Zeichnung dargestellten und im Zusammenhang diesen beschriebenen Ausführungsbeispiele der Erfindung dienen lediglich der Erläuterung der Erfindung und sind für diese nicht beschränkend.

### Bezugiszeichenliste:

- CPU: Steuereinrichtung/Microcontroller
- PCB: Hauptplatine Vorrichtung (STB)
- STB: Vorrichtung zur Zuspielung von Audio- und/oder Videosignalen
- TV: Einrichtung zur Wiedergabe von Audio- und/oder Videosignalen; Fernsehgerät
- 1: Bedienelemente (Vorrichtung (STB))
- 2: Anzeigeeinrichtung/Display (Vorrichtung (STB))
- 3: Eingabeeinrichtung/Fernbedienung (Vorrichtung (STB))
- 4: Einschubschacht für Festplatte (Hard Disk)
- 5: Einrichtung zum Empfang analoger Rundfunksignale
- 6: Einrichtung zum Empfang digitaler Rundfunksignale
- 7: Einrichtung zum Empfang und optional zum Senden digitaler Daten über einen Breitband-Internetzugang (11)
- 8: Transcoder
- 9: Decoder
- 10: Schnittstelle Anschluss Einrichtung zur Wiedergabe von Audio- und/oder Videosignalen (TV)
- 11: Internetzugang/Breitband-Internetzugang

## Patentansprüche

1. Vorrichtung (STB) zur Zuspielung von Audio- und/oder Videosignalen an wenigstens eine externe Einrichtung (TV) zur Wiedergabe von Audiound/oder Videosignalen,
aufweisend
- wenigstens eine Einrichtung (5) zum Empfang analoger Rundfunksignale,
- wenigstens eine Einrichtung (6) zum Empfang digitaler Rundfunksignale,
- wenigstens eine Einrichtung (7) zum Empfang und optional zum Senden digitaler Daten über einen Breitband-Internetzugang (11),
- wenigstens eine Einrichtung (Transcoder, 8) zur Transkodierung von Audio- und/oder Videoinformationen aufweisenden Medienobjekten von einem Quellformat in wenigstens ein Zielformat,
- wenigstens eine Einrichtung (Decoder, 9) zur Dekodierung von Audiound/oder Videoinformationen aufweisenden Medienobjekten, und
- wenigstens eine Schnittstelle (10) zur Bereitstellung von Audio- und/oder Videosignalen an eine externe Einrichtung (TV) zur Wiedergabe von Audio- und/oder Videosignalen.

2. Vorrichtung (STB) nach Anspruch 1, **dadurch gekennzeichnet, dass** die wenigstens eine Einrichtung (7) zum Empfang und optional zum Senden digitaler Daten über einen Breitband-Internetzugang (11), zum Empfang von Audio- und/oder Videoinformationen aufweisenden Medienobjekten ausgebildet ist.

3. Vorrichtung (STB) nach Anspruch 1 oder Anspruch 2, **dadurch gekennzeichnet, dass** die wenigstens eine Einrichtung (7) zum Empfang und optional zum Senden digitaler Daten über einen Breitband-Internetzugang (11), zum Empfang und/oder zum Senden von Einstelldaten, Steuerdaten und/oder Zugangsberechtigungsdaten ausgebildet ist.

4. Vorrichtung (STB) nach einem der Ansprüche 1 bis 3, **gekennzeichnet durch** wenigstens einen an der wenigstens einen Einrichtung (5) zum Empfang analoger Rundfunksignale anschließbaren Analog-Digital-Umsetzer zur Umsetzung eines analogen Eingangssignals in einen digitalen Datenstrom, vorzugsweise einen NXP7138 der NXP Semiconductors.

5. Vorrichtung (STB) nach einem der Ansprüche 1 bis 4, **dadurch gekennzeichnet**, das die wenigstens Einrichtung (6) zum Empfang digitaler Rundfunksignale wenigstens einen Demodulator zur Demodulation digitaler Rundfunksignale aufweist, vorzugsweise gemäß dem DVB-C-Standard, gemäß dem DVB-C2-Standard, gemäß dem DVB-S-Standard und/oder gemäß dem DVB-S2-Standard.

6. Vorrichtung (STB) nach einem der Ansprüche 1 bis 5, ferner aufweisend
- wenigstens eine Schnittstelle zum Anschluss wenigstens einer Eingabeeinrichtung (3) und Mittel zur Verarbeitung von über die Schnittstelle eingehenden Signalen zur Steuerung der Vorrichtung (STB) und/oder der wenigstens einen Einrichtung (TV) zur Wiedergabe von Audio- und/oder Videosignalen,
- wenigstens eine, vorzugsweise austauschbare Einrichtung zur Speicherung von digitalen Daten, und/oder
- wenigstens eine Einrichtung (Conditional Access Modul) zur Entschlüsselung digitaler Daten und/oder digitaler Rundfunksignale.

7. Vorrichtung (STB) nach Anspruch 6, **dadurch gekennzeichnet, dass** die wenigstens eine, vorzugsweise austauschbare Einrichtung zur Speicherung von digitalen Daten zur Speicherung von Audio- und/oder Videosignalen ausgebildet und/oder eingerichtet ist, wobei Audio- und/oder Videosignale vorzugsweise in Medienobjekten gemäß einem MPEG-1-Standard, gemäß einem MPEG-2-Standard und/oder gemäß einem MPEG-4-Standard speicherbar sind, Videosignale besonders vorzugsweise in einem High Definition-Format (HD) und/oder in einem Standard Definiton-Format (SD), besonders vorzusgweise mit einer Bildauflösung von 1920 mal 1080 Bildpunkten (HD) oder 720 mal 576 Bildpunkten (SD).

8. Vorrichtung (STB) nach einem der Ansprüche 1 bis 7, **dadurch gekennzeichnet, dass** wenigstens eine Schnittstelle (10) zur Bereitstellung von Audio- und/oder Videosignalen Videosignale in einem High Definition-Format (HD) und/oder in einem Standard Definiton-Format (SD) bereitstellt, vorzusgweise mit einer Bildauflösung von 1920 mal 1080 Bildpunkten (HD) oder 720 mal 576 Bildpunkten (SD).

9. Vorrichtung (STB) nach einem der Ansprüche 1 bis 8, **dadurch gekennzeichnet, dass** die wenigstens eine Einrichtung (Transcoder, 8) zur Transkodierung von Audio- und/oder Videoinformationen aufweisenden Medienobjekten von einem Quellformat in wenigstens ein Zielformat und/oder die wenigstens eine Einrichtung (Decoder) zur Dekodierung von Audio- und/oder Videoinformationen aufweisenden Medienobjekten Medienobjekte gemäß einem MPEG-1-Standard, gemäß einem MPEG-2-Standard und/oder gemäß einem MPEG-4-Standard verarbeitet.

10. Vorrichtung (STB) nach einem der Ansprüche 1 bis 9, **dadurch gekennzeichnet, dass** die wenigstens eine externe Einrichtung (TV) zur Wiedergabe von Audio- und/oder Videosignalen ein Fernsehgerät (TV) ist.
